# EUROPÄISCHE PATENTANMELDUNG

(11) **EP 0 689 090 A1**
(43) Veröffentlichungstag der Anmeldung: **27.12.1995**
(21) Anmeldenummer: 95109189.1
(22) Anmeldetag: 14.06.1995
(51) Int. Cl.: G03B 21/58

(54) **Wickelrohr für eine Lichtbildwand**

(30) Priorität: 25.06.1994 DE 4422279
(71) Anmelder: REFLECTA GMBH FOTO FILM PROJEKTION, D-91126 Schwabach (DE)
(72) Erfinder: Junge, Gerhard, D-91189 Regelsbach (DE)
(74) Vertreter: LOUIS, PÖHLAU, LOHRENTZ & SEGETH

(57) **Zusammenfassung**

Es wird ein Wickelrohr (10) für eine Lichtbildwand beschrieben, das einen Austrittsschlitz (12) für die Lichtbildwand aufweist. Die beiden Schlitzränder (14, 16) des Austrittsschlitzes (12) verlaufen in axialer Richtung des Wickelrohres (10). Um unerwünschte Abdrücke an der Lichtbildwand im aufgespannten Zustand zu verhindern, sind beim erfindungsgemäßen Wickelrohr (10) die beiden Schlitzränder (14, 16) gegeneinander in radialer Richtung des Wickelrohres (10) versetzt, wobei der radial äußere Schlitzrand (16) zweckmäßigerweise über den radial inneren Schlitzrand (14) in Umfangsrichtung des Wickelrohrs (10) übersteht, und der radial äußere Schlitzrand (16) mit einer in einem abgerundeten Schneidenendabschnitt (24) endenden zungenartigen Verjüngung (22) ausgebildet ist.

## Beschreibung

Die Erfindung betrifft ein für eine Lichtbildwand vorgesehenes Wickelrohr, das einen Austrittsschlitz für die Lichtbildwand aufweist, dessen beide Schlitzränder in axialer Richtung des Wickelrohres verlaufen.

Ein derartiges Wickelrohr ist bspw. aus der DE 31 15 177 C1 bekannt. Dieses bekannte Wickelrohr ist einfach kreisrund, d.h. mit einem kreisringförmigen Querschnitt ausgebildet, so daß die beiden Schlitzränder des Austrittsschlitzes für die Lichtbildwand in radialer Richtung auf derselben Höhe liegen. Die Lichtbildwand wird bspw. mittels eines Keders am Wickelrohr fixiert. Bei einem derartigen bekannten Wickelrohr mit radial auf derselben Höhe befindlichen Schlitzrändern des Austrittsschlitzes für die Lichtbildwand sind Abdrücke des Austrittsabschnittes der Lichtbildwand aus dem Austrittsschlitz deshalb nicht zuverlässig zu verhindern, weil die Wanddicke der Lichtbildwand an dem besagten Austrittsabschnitt eine stufenartige Änderung der Wickelrichtung der Lichtbildwand im auf das Wickelrohr aufgewickelten Zustand bewirkt. Um diese dem jeweiligen Wiclungsumfang entsprechenden unerwünschten Abdrücke an der Lichtbildwand zu vermeiden, schlägt die genannte DE 31 15 177 C1 eine Einrichtung vor, welche eine Entspannung der auf das Wickelrohr aufgerollten Lichtbildwand bewirkt. Eine solche Entspannung der auf das Wickelrohr aufgerollten Lichtbildwand wird auch in der DE-OS 26 28 886 vorgeschlagen. Hier wird die Lichtbildwand nicht an einem Wickelrohr sondern einfach an einer Stange festgelegt. Auch hierbei ergibt sich jedoch das Problem, daß Abdrücke an der Lichtbildwand im aufgespannten Zustand infolge der Wanddicke der Lichtbildwand und der hierdurch gegebenen stufenartigen radialen Richtungsänderung der einzelnen Wicklungen der aufgewickelten Lichtbildwand nicht zuverlässig ausschließbar sind.

Der Erfindung liegt die Aufgabe zugrunde, ein Wickelrohr für eine Lichtbildwand der eingangs genannten Art zu schaffen, mit welchem bei einer einfachen Ausbildung desselben ein unerwünschte Abdrücke des Austrittsabschnittes der Lichtbildwand aus dem Austrittsschlitz des Wickelrohres zuverlässig verhindert werden.

Diese Aufgabe wird bei einem Wickelrohr der eingangs genannten Art erfindungsgemäß dadurch gelöst, daß die beiden Schlitzränder gegeneinander in radialer Richtung des Wickelrohres versetzt sind. Dabei wird die radiale Versetzung der beiden Schlitzränder des Austrittsschlitzes zweckmäßigerweise derartig dimensioniert, daß sie an die Wanddicke der Lichtbildwand angepaßt ist.

Eine bevorzugte Ausbildung des erfindungsgemäßen Wickelrohres ist dadurch gekennzeichnet, daß der radial äußere Schlitzrand über den radial inneren Schlitzrand in Umfangsrichtung des Wickelrohres übersteht und daß der radial äußere Schlitzrand mit einer in einem abgerundeten Schneidenendabschnitt endenden zungenartigen Verjüngung ausgebildet ist, weil mit einer solchen Ausbildung des Wickelrohres auf ebenso einfache wie elegante Art und Weise die einzelnen Wicklungen der Lichtbildwand im auf das Wickelrohr aufgewickelten Zustand in radialer Richtung ohne Stufung verlaufen können, so daß unerwünschte Abdrücke des Austrittsabschnitts der Lichtbildwand im Bereich bzw. imn Anschluß an den Austrittsschlitz des Wickelrohres vermieden werden.

Der radial innere Schlitzrand kann mit einer Abrundung ausgebildet sein, deren Krümmungsradius vorzugsweise mindestens annähernd der halben Wanddicke des Wickelrohres entspricht. Das Wickelrohr kann bspw. eine Wanddicke von 2 mm besitzen. Selbstverständlich sind auch andere Wanddicken möglich.

Ein kontinuierlicher Übergang der einzelnen Wicklungen der auf das erfindungsgemäße Wickelrohr aufgewickelten Lichtbildwand ergibt sich, wenn bei dem erfindungsgemäßen Wickelrohr die zungenartige Verjüngung einen konkav abgerundeten Innenflächenendabschnitt und der radial innere Schlitzrand einen konvex abgerundeten Außenflächenendabschnitt aufweist, wobei der Krümmungsmittelpunkt des Innenflächenendabschnittes mit dem Krünmungsmittelpunkt des Außenflächenendabschnittes zusammenfällt. Hierdurch ergibt sich nämlich gleichsam ein glatter Übergang zwischen dem Austrittsabschnitt der Lichtbildwand aus dem Austrittsschlitz und der an diese erste Windung anschließenden zweiten Windung der Lichtbildwand sowie zwischen den darauffolgenden Windungen der Lichtbildwand, so daß unerwünschte Abdrücke in Form von Querrillen in der Lichtbildwand erfindungsgemäß zuverlässig verhindert werden.

Das erfindungsgemäße Wickelrohr weist vorzugsweise bis in die Nachbarschaft des radial äußeren Schlitzrandes eine konstante Dicke und einen Ringprofilquerschnitt nach Art einer archimedischen Spirale auf. Bei einem solchermaßen ausgebildeten Wickelrohr können die Radien des Wickelrohres auf einem zu seiner zentralen Mittelachse zumindest annähernd konzentrischen Kreis liegen.

Das erfindungsgemäße Wickelrohr weist den besonderen Vorteil auf, daß der Austrittsabschnitt der Lichtbildwand unmittelbar nach dem Austrittsschlitz des Wickelrohres und das Wickelrohr aneinander formmäßig derartig angepaßt sind, daß sich der radial äußere Schlitzrand des Austrittsschlitzes des Wickelrohres gleichsam an den Austrittsabschnitt der Lichtbildwand stufenlos anschmiegt, so daß unerwünschte, in Querrichtung der Lichtbildwand verlaufende Abdrücke im aufgespannten Zustand der Lichtbildwand auf einfache Weise zuverlässig verhindert werden.

Weitere Einzelheiten, Merkmale und Vorteile ergeben sich aus der nachfolgenden Beschreibung eines in der Zeichnung abschnittweise und in einem stark vergrößerten Maßstab gezeichneten Ausführungsbeispieles des erfindungsgemäßen Wickelrohres für eine Lichtbildwand. Es zeigen:
- Fig. 1: in einer perspektivischen Darstellung stark vergrößert einen Abschnitt des Wickelrohres, und
- Fig. 2: eine weiter vergrößerte Darstellung des Details A in Fig. 1 zur Verdeutlichung des geometrischen Ortes der Krümmungsmittelpunkte der Krümmungsradien Ri des Wickelrohres gemäß Fig. 1.

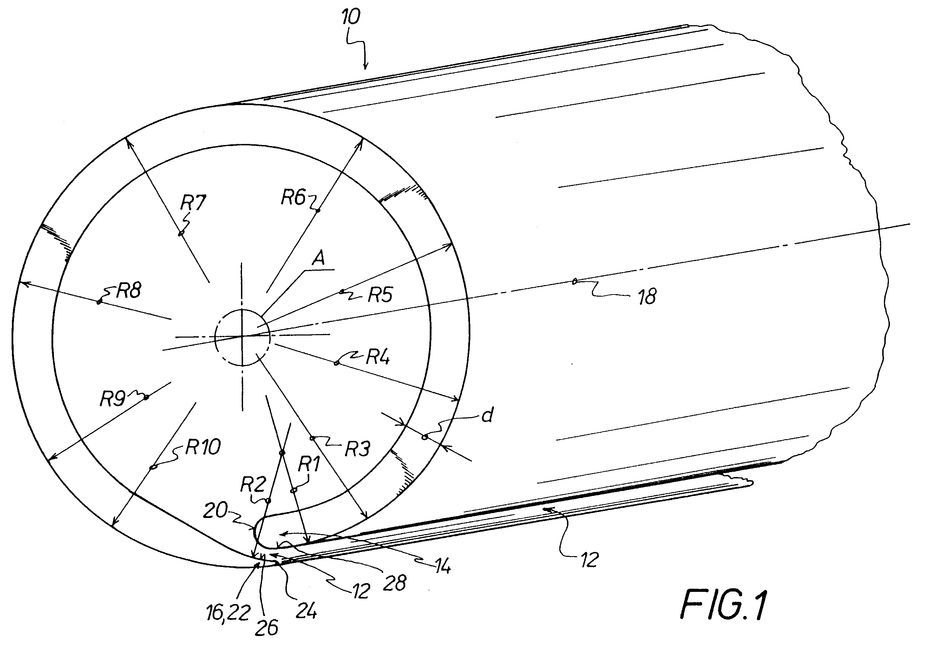

Fig. 1 zeigt einen Abschnitt eines Wickelrohres 10 für eine Lichtbildwand. Das Wickelrohr 10 weist einen Austrittsschlitz 12 für die Lichtbildwand auf, der durch einen ersten Schlitzrand 14 und durch einen zweiten Schlitzrand 16 begrenzt ist. Der Austrittsschlitz 12 verläuft in axialer Richtung des Wickelrohres 10, d.h. in Richtung der zentralen Mittelachse 18 des Wickelrohres 10.

Die beiden Schlitzränder 14 und 16 sind - wie aus Fig. 1 deutlich ersichtlich ist - in radialer Richtung des Wickelrohres 10 gegeneinander versetzt, d.h. der erste Schlitzrand 14 weist einen Radius auf, der kleiner ist als der Radius des zweiten Schlitzrandes 16. Außerdem ist aus Fig. 1 ersichtlich, daß der radial äußere Schlitzrand 16 über den radial inneren Schlitzrand 14 in Umfangsrichtung des Wickelrohres übersteht. Der radial innere Schlitzrand 14 ist mit einer Abrundung 20 ausgebildet, deren Krümmungsradius zumindest annähernd der halben Wanddicke d des Wickelrohres entspricht. Durch diese Abrundung 20 werden Beschädigungen des Befestigungsendabschnittes der (nicht gezeichneten) Lichtbildwand verhindert.

Der radial äußere Schlitzrand 16 ist mit einer zungenartigen Verjüngung 22 ausgebildet, die in einem abgerundeten Schneidenendabschnitt 24 endet. Die zungenartige Verjüngung 22 ist außerdem mit einem konkav abgerundeten Innenflächenendabschnitt 26 und der radial innere Schlitzrand 14 ist mit einem konvex abgerundeten Außenflächenendabschnitt 28 ausgebildet, wobei der Krümmungsmittelpunkt des Krümmungsradius R1 des besagten Außenflächenendabschnittes 28 des Schlitzrandes 14 und der Krümmungsmittelpunkt des Krümmungsradius R2 des Innenflächenendabschnittes 26 des Schlitzrandes 16 vorzugsweise zusammenfallen, um den Außenflächenendabschnitt 28 und den Innenflächenendabschnitt 26 an den Austrittsabschnitt der Lichtbildwand anzuschmiegen. Durch die zungenartige Verjüngung 22 mit dem abgerundeten Schneidenendabschnitt 24 ergibt sich außerdem ein stufenloser Übergang zwischen dem Austrittsabschnitt der Lichtbildwand und dem radial äußeren, zweiten Schlitzrand 16, so daß die übereinander befindlichen Wicklungen der Lichtbildwand im aufgewickelten Zustand stufenlos aufeinandergewickelt sind, so daß unerwünschte Querrillen in der aufgespannten Lichtbildwand verhindert werden.

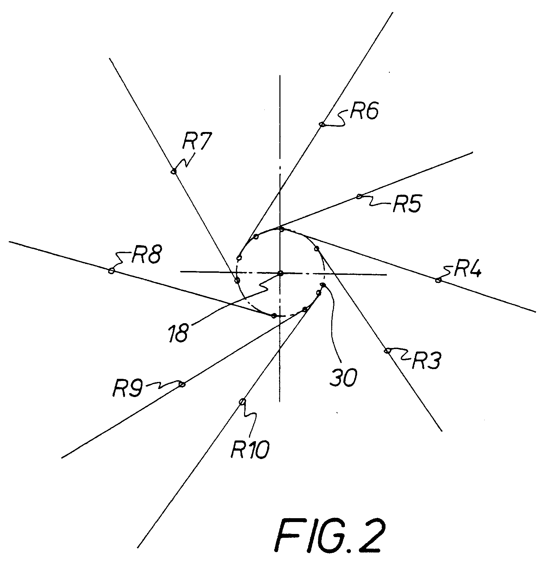

Das Wickelrohr 10 weist bis in die Nachbarschaft des radial äußeren, zweiten Schlitzrandes 16 eine konstante Dicke d auf. Es ist zweckmäßigerweise nach Art einer archimedischen Spirale mit in Umfangsrichtung zunehmenden Radien ausgebildet. Einige dieser Radien sind mit R3, R4, R5, R6, R7, R8, R9 und R10 bezeichnet. Die Mittelpunkte dieser Radien R3 bis R10 können auf einem Kreis 30 (sh. Fig. 2) liegen, der zur zentralen Mittelachse 18 des Wickelrohres 10 zumindest annähernd konzentrisch vorgesehen ist.

## Patentansprüche

1. Für eine Lichtbildwand vorgesehenes Wickelrohr, das einen Austrittsschlitz (12) für die Lichtbildwand aufweist, dessen beide Schlitzränder (14, 16) in axialer Richtung des Wickelrohres (10) verlaufen,
**dadurch gekennzeichnet,**
daß die beiden Schlitzränder (14, 16) gegeneinander in radialer Richtung des Wickelrohres (10) versetzt sind.

2. Wickelrohr nach Anspruch 1,
**dadurch gekennzeichnet,**
daß der radial äußere Schlitzrand (16) über den radial inneren Schlitzrand (14) in Umfangsrichtung des Wickelrohres (10) übersteht, und daß der radial äußere Schlitzrand (16) mit einer in einem abgerundeten Schneidenendabschnitt (24) endenden zungenartigen Verjüngung (22) ausgebildet ist.

3. Wickelrohr nach Anspruch 1,
**dadurch gekennzeichnet,**
daß der radial innere Schlitzrand (14) mit einer Abrundung (20) ausgebildet ist, deren Krümmungsradius vorzugsweise mindestens annähernd der halben Wanddicke (d) des Wickelrohres (10) entspricht.

4. Wickelrohr nach Anspruch 2,
**dadurch gekennzeichnet,**
daß die zungenartige Verjüngung (22) einen konkav abgerundeten Innenflächenendabschnitt (26) und der radial innere Schlitzrand (14) einen konvex abgerundeten Außenflächenendabschnitt (28) aufweist, wobei der Krümmungsmittelpunkt des Krümmungsradius des Innenflächenendabschnittes (26) mit dem Krümmungsmittelpunkt des Krümmungsradius des Außenflächenendabschnittes (28) zusammenfällt.

5. Wickelrohr nach einem der vorhergehenden Ansprüche,
**dadurch gekennzeichnet,**
daß es bis in die Nachbarschaft des radial äußeren Schlitzrandes (16) eine konstante Wanddicke (d) und einen Ringprofilquerschnitt nach Art einer archimedischen Spirale aufweist.

6. Wickelrohr nach Anspruch 5,
**dadurch gekennzeichnet,**
daß die Mittelpunkte der Radien (R3 bis R10) des Wickelrohres (10) auf einem zu seiner zentralen Mittelachse (18) zumindest annähernd konzentrischen Kreis (30) liegen.
